# EUROPÄISCHE PATENTSCHRIFT

(11) **EP 2 161 096 B1**
(45) Veröffentlichungstag und Bekanntmachung des Hinweises auf die Patenterteilung: **09.11.2011**
(21) Anmeldenummer: 09010978.6
(22) Anmeldetag: 27.08.2009
(51) Int. Cl.: B23Q 1/01, B23Q 1/54

(54) **Vorrichtung zur abtragenden Bearbeitung grosser Werkstücke**
Device for abrasive processing of large workpieces
Dispositif de traitement par enlèvement de grandes pièces à usiner

(30) Priorität: 05.09.2008 DE 102008046070
(43) Veröffentlichungstag der Anmeldung: 10.03.2010
(73) Patentinhaber: Unger, Klaus, 24217 Schönburg (DE); Wolter, Antje, 24145 Kiel (DE)
(72) Erfinder: Unger, Klaus, 24217 Schönberg (DE); Klein, Harry, 24161 Altenholz (DE)
(74) Vertreter: Thomas, Götz

(56) Entgegenhaltungen:
- DE-C1- 10 124 935
- US-A1- 2006 291 971
- US-A1- 2007 059 116

## Beschreibung

Die Erfindung betrifft eine Vorrichtung zur abtragenden Bearbeitung von großen Werkstücken gemäß dem Oberbegriff des Anspruchs 1.

Vorrichtungen der eingangs genannten Art werden unter anderem zur Herstellung von Formen für Bootsrümpfe oder Windturbinen-Rotorblätter aus faserverstärktem Kunststoff eingesetzt, deren größte Abmessungen mehrere Dutzend Meter betragen können. Da die Formen eine komplexe Gestalt aufweisen und eine sehr hohe Formgenauigkeit besitzen müssen, werden sie gewöhnlich zuerst aus einem aus Holz oder geschäumtem Kunststoff bestehenden Formrohling ausgefräst und nach dem Auftrag und dem Aushärten einer Spachtelpaste durch Schleifen nachbearbeitet, um die gewünschte Oberflächenkontur mit hoher Genauigkeit zu erzeugen. Die Vorrichtungen können jedoch auch zur genauen Bearbeitung anderer großer Werkstücke eingesetzt werden, zum Beispiel in der Luft- und Raumfahrtindustrie.

Eine zur Bearbeitung großer Werkstücke dienende Vorrichtung der eingangs genannten Art ist zum Beispiel aus der DE 102 11 754 B4 bekannt. Die bekannte Vorrichtung umfasst eine als Portal oder Gantry ausgebildete verwindungssteife Tragstruktur, die auf zwei horizontalen Linearführungen entlang einer X-Achse linear verfahrbar ist und zwei entlang einer Y-Achse senkrecht zur X-Achse ausgerichtete Traversenführungen trägt, an denen eine Pinolenhalterung gesteuert verfahrbar ist. Die nach oben und nach unten offene Pinolenhalterung umgibt eine Pinole, die in der Pinolenhalterung gesteuert entlang einer vertikalen, zur X- und Y-Achse senkrechten Z-Achse verfahrbar ist. Die Pinole trägt an ihrem unteren Ende einen Bearbeitungskopf, der sich in Bezug zu der zu bearbeitenden Form mit drei Freiheitsgraden der Bewegung verfahren lässt, um diese abtragend zu bearbeiten.

Ein für eine solche Bearbeitungsvorrichtung bestimmter, in der DE 102 11 754 B4 nicht näher beschriebener Bearbeitungskopf ist in der DE 10 2005 043 835 A1 offenbart. Der Bearbeitungskopf umfasst dort eine Gabel, die mittels eines Drehgelenks um eine vertikale C-Achse drehbar an der Pinole angebracht wird, und ist mit einem Bearbeitungswerkzeug ausgestattet, das sich in Bezug zur Gabel um eine zweite, die C-Achse kreuzende A-Achse verschwenken lässt, um die Anstellung des Bearbeitungswerkzeugs in Bezug zu dem zu bearbeitenden Werkstück zu verändern.

Durch die insgesamt fünf Freiheitsgrade der Bewegung, mit denen sich das Bearbeitungswerkzeug in Bezug zum Werkstück bewegen lässt, kann das Bearbeitungswerkzeug in allen denkbaren Lagen positioniert werden.

Obwohl sich derartige Vorrichtungen wegen einer relativ hohen Positioniergenauigkeit bei der Positionierung und wegen einer relativ schnellen Verfahrbarkeit des Bearbeitungswerkzeugs in der Praxis sehr gut bewährt haben, weisen sie nichtsdestotrotz einige Nachteile auf:
Erstens ist das Drehgelenk zwischen dem Bearbeitungskopf und der Pinole in einem verhältnismäßig geringen Abstand von dem Bearbeitungswerkzeug angeordnet, was eine gute Abdichtung eines Drehlagers des Gelenks erforderlich macht, um ein Eindringen des bei der Bearbeitung erzeugten Staubs in das Drehlager zu verhindern. Eine solche Abdichtung des Drehlagers ist jedoch wegen der Beweglichkeit des Bearbeitungskopfs in Bezug zur Pinole nicht einfach zu erzielen.

Da das Bearbeitungswerkzeug gegen das zu bearbeitende Werkstück angepresst werden muss, ist zweitens das Drehlager bei der Bearbeitung erheblichen Beanspruchungen ausgesetzt. Dadurch unterliegt das Drehlager einem erhöhten Verschleiß, der zu einer Vergrößerung des zwischen Pinole und Bearbeitungskopf vorhandenen Spiels und damit zur einer Beeinträchtigung der Positioniergenauigkeit des Bearbeitungswerkzeugs und der Genauigkeit der bearbeiteten Oberflächen führt.

Wie in Fig. 3 der DE 102 11 754 B4 dargestellt, kann die Pinole einen quadratischen Querschnitt aufweisen und ein ebenfalls quadratisches Führungsrohr durchsetzen, in dem sie mittels mehrerer Linearführungen geführt wird, die paarweise zwischen benachbarten Seitenwänden des Führungsrohrs und der Pinole angeordnet sind, wodurch keine optimale Biegesteifigkeit erreicht werden kann.

Aus der DE 101 24 935 C1 ist bereits eine Vorrichtung der eingangs genannten Art bekannt, bei der die Y-Achse entlang eines Kreisbogens verläuft und bei der die Pinole in Bezug zur Pinolenhalterung um eine zur X-Achse parallele Drehachse schwenkbar ist. Durch die Schwenkbarkeit der Pinole in Bezug zur Pinolenhalterung ist es möglich, die Ausrichtung des Bearbeitungswerkzeugs beizubehalten, wenn sich die Ausrichtung der Pinolenhalterung bei einer Bewegung entlang der Y-Achse verändert.

Ausgehend hiervon liegt der Erfindung die Aufgabe zugrunde, eine Bearbeitungsvorrichtung der eingangs genannten Art dahingehend zu verbessern, dass sich das Bearbeitungswerkzeug in Bezug zum Werkstück mit größerer Positioniergenauigkeit positionieren lässt.

Diese Aufgabe wird erfindungsgemäß durch die Merkmale im Anspruch 1 gelöst.

Durch die erfindungsgemäßen Maßnahmen kann auf das zwischen der Pinole und dem Bearbeitungskopf angeordnete verschleißanfällige Drehgelenk verzichtet werden. Da sich die Pinolenhalterung über eine verhältnismäßig große Länge erstreckt, kann darüber hinaus für eine sehr steife und wenig nachgiebige Drehlagerung des Bearbeitungskopfs um die Z-Achse gesorgt werden.

Gemäß einer bevorzugten Ausgestaltung der Erfindung ist vorgesehen, dass die Pinole ein im Querschnitt polygonales Hohlprofil umfasst und dass die Linearführungen an den Ecken des Hohlprofils zwischen der Pinole und der Pinolenhalterung angeordnet sind. Da polygonale Hohlprofile in diesen Richtungen die größte Biegesteifigkeit besitzen, wird für eine besonders steife Anbindung der Pinole an die Pinolenhalterung und damit ebenfalls für eine Verbesserung der Positioniergenauigkeit des Bearbeitungswerkzeugs gesorgt.

Um den vertikalen Bewegungsweg des Bearbeitungswerkzeugs zu verlängern, kann die Pinole teleskopierbar sein und vorzugsweise ein Teleskoprohr umfasst, das entlang von Linearführungen in das Hohlprofil einfahrbar und aus dem Hohlprofil ausfahrbar ist.

Die Linearführungen der Pinole und des Teleskoprohrs sind vorteilhaft paarweise auf Diagonalen des im Querschnitt im Wesentlichen quadratischen Hohlprofils angeordnet und umfassen zweckmäßig jeweils eine starr mit der Pinole bzw. mit dem Teleskoprohr verbundene Führungsschiene und einen starr mit der Pinolenhalterung bzw. mit dem Hohlprofil verbundenen Führungsschuh mit mehreren auf der Führungsschiene abrollenden Kugeln oder Rollen.

Die höchste Positioniergenauigkeit wird dadurch erreicht, dass die Pinolenhalterung an ihrem oberen und an ihrem unteren Stirnende ein Drehlager für die Pinole aufweist. Diese Drehlager umfassen in bekannter Weise einen Außenring und einen Innenring, von denen der erstere starr mit einem Gehäuse der Pinolenhalterung verbunden ist und der letztere starr mit den Führungsschuhen der Linearführungen verbunden ist.

Die gesteuerte Drehung der Pinole in Bezug zur Pinolenhalterung erfolgt mittels eines Drehantriebs, während das Verfahren der Pinole in Bezug zur Pinolenhalterung mittels mindestens eines Stellantriebs erfolgt. Sämtliche dieser Antriebe sowie bevorzugt auch ein oder zwei Stellantriebe zum Verfahren der Pinolenhalterung entlang der Y-Achse sind vorteilhaft im Inneren eines geschlossenen Gehäuses der Pinolenhalterung untergebracht, wo sie gut vor Staub geschützt sind.

Die X-Achse, die Y-Achse und die Z-Achse sind wie üblich senkrecht zueinander ausgerichtet, wobei die Z-Achse ebenfalls wie üblich vertikal ist.

Im folgenden wird die Erfindung anhand eines in der Zeichnung dargestellten Ausführungsbeispiels näher erläutert. Es zeigen:
Fig. 1: eine schematische Draufsicht auf eine erfindungsgemäße Vorrichtung zur abtragenden Bearbeitung von großen Teilen;
Fig. 2: eine teilweise weggeschnittene perspektivische Ansicht einer Pinolenhalterung, einer Pinole und eines Bearbeitungskopfs der Vorrichtung;
Fig. 3: eine teilweise weggeschnittene Vorderseitenansicht der Pinolenhalterung, der Pinole und des Bearbeitungskopfs;
Fig. 4: eine teilweise weggeschnittene Seitenansicht der Pinolenhalterung, der Pinole und des Bearbeitungskopfs;
Fig. 5: eine Oberseitenansicht der Pinolenhalterung und der Pinole;
Fig. 6: eine Unterseitenansicht der Pinolenhalterung und der Pinole;
Fig. 7: eine vergrößerte Ansicht des Ausschnitts VII in Fig. 2;
Fig. 8: eine vergrößerte Ansicht des Ausschnitts VIII in Fig. 3.

Die in der Zeichnung dargestellte Hochgeschwindigkeits-Fräs- und Schleifmaschine 2 dient zur abtragenden Bearbeitung von Formen für Bootsrümpfe oder Windturbinen-Rotorblättern aus glasfaserverstärktem Kunststoff oder von anderen großen Werkstücken.

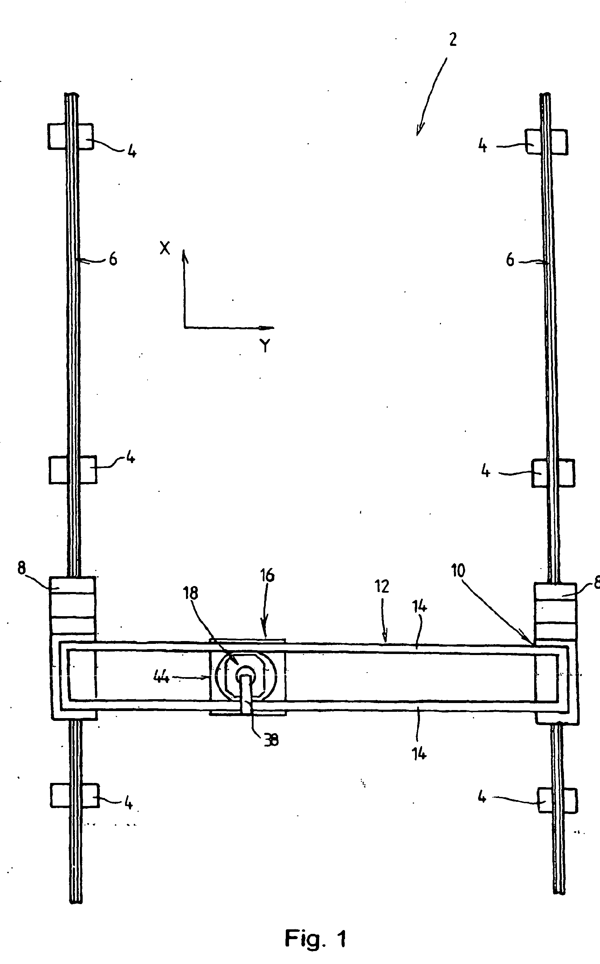

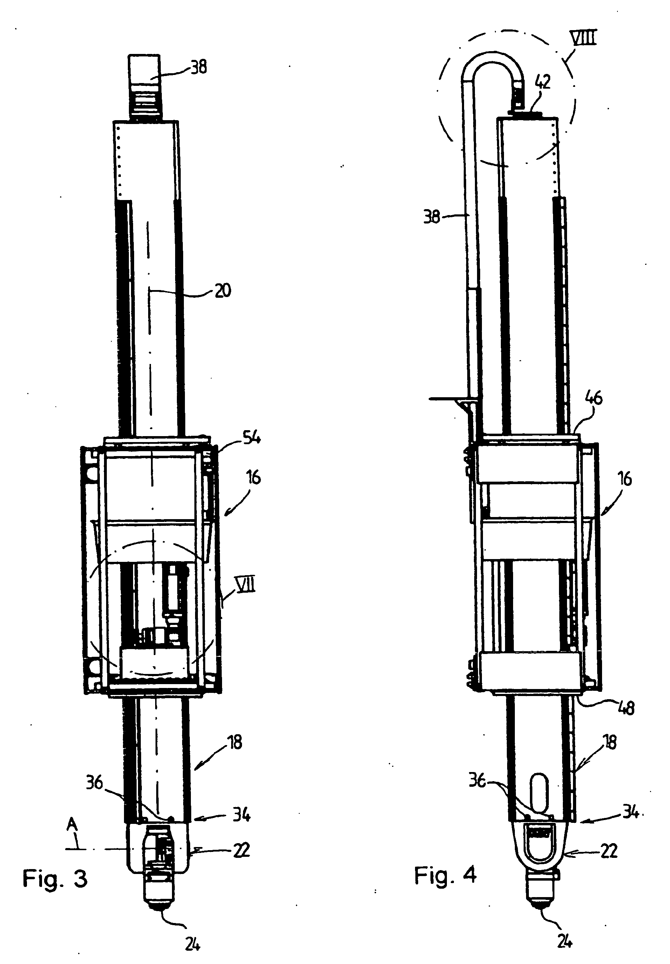

Wie am besten in Fig. 1 dargestellt, besteht die Fräsmaschine 2 im Wesentlichen aus zwei horizontalen, im Abstand voneinander auf Fundamenten 4 verlegten langgestreckten parallelen Führungsschienen 6, einem mittels zweier Antriebseinheiten 8 gesteuert in Richtung einer von den Führungsschienen 6 definierten X-Achse verfahrbaren Portal 10, dessen Traverse 12 zwei zueinander parallele Führungsschienen 14 trägt, einer Pinolenhalterung 16, die an den beiden Führungsschienen 14 in Richtung einer horizontalen, zur X-Achse senkrechten Y-Achse gesteuert verfahrbar ist, einer Pinole 18, die in der Pinolenhalterung 16 in Richtung einer vertikalen, zur X- und Y-Achse senkrechten Z-Achse auf und ab verfahrbar ist und um eine vertikale Längsmittelachse 20 der Pinolenhalterung 16 drehbar ist, sowie einem am unteren Ende der Pinole 18 montierten Bearbeitungskopf 22. Der Bearbeitungskopf 22 ist starr mit dem unteren Ende der Pinole 18 verbunden und umfasst ein Fräs- oder Schleifwerkzeug 24, das mittels eines Schwenkantriebs (nicht sichtbar) um eine zur Z-Achse senkrechte A-Achse (Fig. 3) in Bezug zum Bearbeitungskopf 22 verschwenkbar ist und mittels eines Drehantriebs (nicht sichtbar) in Drehung versetzt werden kann, um ein Werkstück (nicht dargestellt) fräsend oder schleifend zu bearbeiten.

Das Portal 10 und der Bearbeitungskopf 22 weisen jeweils einen an sich bekannten Aufbau auf und sollen daher hier nicht näher beschrieben werden. Beispielsweise könnte das Portal 16 den in der DE 102 11 754 B4 beschriebenen Aufbau besitzen, während der Bearbeitungskopf den in der DE 10 2005 043 835 A1 beschriebenen Aufbau besitzen könnte, jedoch ohne die Einrichtungen zum Drehen des Bearbeitungskopfs 22 um eine vertikale C-Achse.

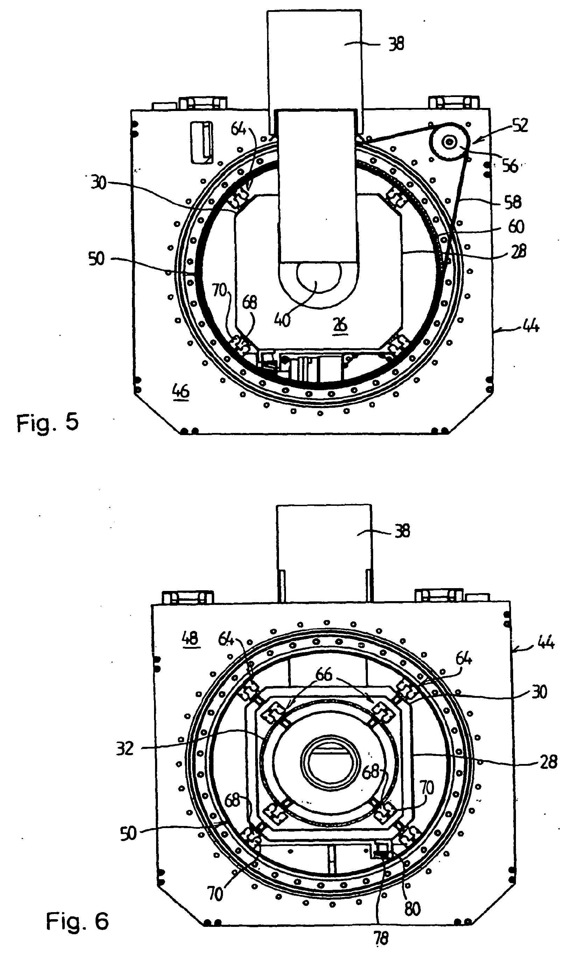

Die Pinole 18 umfasst ein langgestrecktes, aus einem steifen Waben- oder Sändwich-Material hergestelltes und am oberen Ende durch eine Verschlussplatte 26 verschlossenes Hohlprofil 28, das einen quadratischen Querschnitt mit abgeschrägten Ecken 30 besitzt, wie am besten in Fig. 5 und 6 dargestellt. Die Pinole 18 umfasst weiter ein innerhalb des Hohlprofils 28 angeordnetes zylindrisches, zur Längsmittelachse 20 der Pinolenhalterung 16 koaxiales Teleskoprohr 32, das in Bezug zur Pinole 18 in Richtung der Längsmittelachse 20 verschiebbar und in diskreten Verschiebestellungen gegenüber der Pinole 18 arretierbar ist. Das Teleskoprohr 32 trägt den Bearbeitungskopf 22, der starr mit dem unteren Stirnende des Teleskoprohrs 32 verbunden ist.

Um zu gewährleisten, dass der Bewegungsweg einer Spitze des Fräs- oder Schleifwerkzeugs 24 in Bezug zur vertikalen Z-Achse zentriert werden kann, ist zwischen dem unteren Stirnende des Teleskoprohrs 32 und dem benachbarten oberen Stirnende des Bearbeitungskopfs 22 eine Zentriervorrichtung 34 vorgesehen. Die Zentriervorrichtung 34 umfasst eine am unteren Stirnende des Teleskoprohrs 32 angebrachte horizontale Halteplatte (nicht sichtbar) und eine der Halteplatte gegenüberliegende, starr mit dem Bearbeitungskopf 22 verbundene horizontale Zentrierplatte (nicht sichtbar), die sich mit Hilfe von Stellschrauben 36 in zwei zur Längsmittelachse 20 senkrechten Richtungen verstellen lässt.

Durch das Innere des Teleskoprohrs 30 erstrecken sich mehrere flexible Stromleitungen und eine Druckluftleitung (nicht dargestellt) bis zum Bearbeitungskopf 22. Die ersteren werden benötigt, um den Schwenkantrieb zum Verschwenken des Fräs- oder Schleifwerkzeugs 24 um die A-Achse und den Drehantrieb zum Antreiben des Fräs- oder Schleifwerkzeugs 24 mit Strom zu versorgen, während die letztere dazu dient, das Fräs- oder Schleifwerkzeug 24 während der abtragenden Bearbeitung eines Werkstücks mit Druckluft zu versorgen.

Die über die Traverse 12 zur Pinolenhalterung 16 geführten Leitungen erstrecken sich über einen flexiblen, U-förmig gebogenen Leitungsträger 38 bis zum oberen Ende der Pinole 18, wo sie durch eine Öffnung 40 in der Verschlussplatte 26 in das Innere der Pinole 18 bzw. des hohlen Teleskoprohrs 32 eintreten. Das zur Pinole 18 benachbarte Stirnende des Leitungsträgers 38 ist durch ein Drehgelenk 42 mit der Verschlussplatte 26 verbunden.

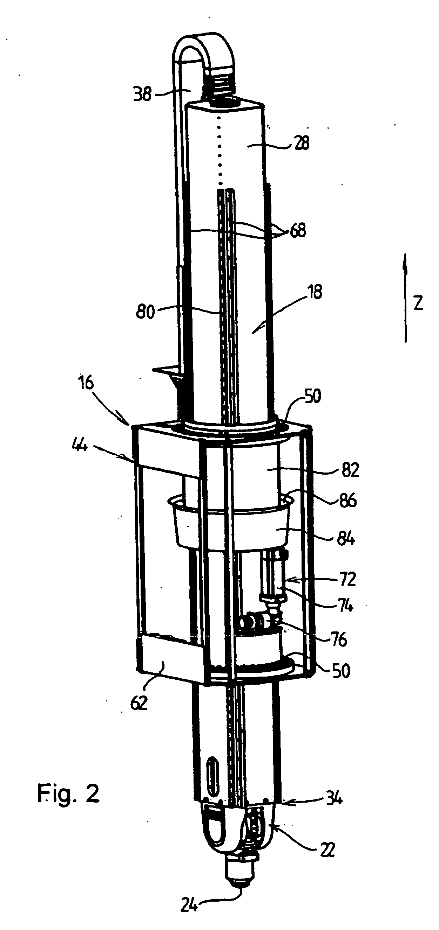

Die Pinolenhalterung 16 umfasst ein steifes quaderförmiges Gehäuse 44 (in Fig. 2 nur teilweise dargestellt), das wie das Hohlprofil 28 der Pinole 18 aus einem steifen Waben- oder Sandwich-Material hergestellt ist. Das Gehäuse 44 ist an seinem oberen und an seinem unteren Ende durch einen Deckel 46 bzw. durch einen Boden 48 verschlossen, die jeweils ein Drehlager 50 für die Pinole 18 aufweisen. Die Außenringe der beiden Drehlager 50 sind starr mit dem Deckel 46 bzw. dem Boden 48 des Gehäuses 44 verbunden, während die Innenringe jeweils drehfest mit der Pinole 18 verbunden sind.

Das Gehäuse 44 umschließt zwei Stellantriebe (nicht sichtbar), mit denen die Pinolenhalterung 16 gesteuert entlang der beiden Führungsschienen 14 der Traverse 12 verfahren werden kann, sowie einen Drehantrieb 52, mit dem die Pinole 18 und die Innenringe der beiden Drehlager 50 in Bezug zum Gehäuse 44 um die Längsmittelachse 20 gedreht werden können. Wie am besten in Fig. 3 und 5 dargestellt, besteht der Drehantrieb 52 aus einem an der Unterseite des Deckels 46 angeflanschten Elektromotor 54, dessen Abtriebswelle sich durch eine Öffnung des Deckels 46 erstreckt und oberhalb des Deckels 46 mit einer Riemenscheibe 56 eines Zahnriementriebs bestückt ist. Der Zahnriementrieb umfasst einen Zahnriemen 58, der die Riemenscheibe und einen drehfest mit dem Innenring des oberen Drehlagers 50 verbundenen Zahnkranz 60 umschlingt. An Stelle eines Riementriebs kann der Drehantrieb 52 jedoch auch ein Zahnradgetriebe zwischen dem Elektromotor 54 und dem Innenring des Drehlagers 50 umfassen.

Die Steuerung des Drehantriebs 52 ist so programmiert, dass die Pinole 18 aus einer Nullstellung heraus um nicht mehr als 360 Grad in jeder der beiden entgegengesetzten Drehrichtungen verdreht werden kann. Dadurch wird verhindert, dass sich die durch die Pinole 18 verlaufenden Leitungen infolge der Drehung der Pinole 18 im Inneren des Teleskoprohrs 32 übermäßig stark verdrillen können.

Das zur Herstellung der vertikalen Seitenwände 62 (Fig. 2) des Gehäuses 44 der Pinolenhalterung 16 und des Hohlprofils 28 der Pinole 18 dienende Waben- oder Sandwichmaterial besteht vorzugsweise aus einem Stück, das entlang der Ecken des Gehäuses 44 bzw. des Hohlprofils 28 eingefräst wird, um Filmscharniere zu bilden, entlang von denen das Waben- oder Sandwichmaterial anschließend gefaltet werden kann, um die quadratische Querschnittsform des Gehäuses 44 bzw. die achteckige Querschnittsform der Pinole 18 zu erhalten.

Zwischen der Pinolenhalterung 16 und der Pinole 18 einerseits sowie zwischen dem Hohlprofil 28 und dem Teleskoprohr 32 der Pinole 18 andererseits sind jeweils vier Linearlager 64, 66 in gleichen Winkelabständen um die Längsmittelachse 20 herum angeordnet. Die Linearlager 64 zwischen der Pinolenhalterung 16 und der Pinole 18 umfassen vier langgestreckte, geradlinige Führungsschienen 68, die jeweils auf eine der abgeschrägten Ecken 30 der Pinole 18 aufgeschraubt sind, sowie vier langgestreckte, im Querschnitt U-förmige, die Führungsschienen 68 umgreifende und mit Kugel- oder Rollenführungen bestückte Führungsschuhe 70, die an ihrem oberen und an ihrem unteren Ende starr mit dem Innenring des Drehlagers 50 verbunden sind. Die Kugel- oder Rollenführungen der Führungsschuhe 70 weisen jeweils mehrere in Richtung der Längsmittelachse 20 hintereinander angeordnete, in Käfigen gelagerte Kugeln oder Rollen auf, die auf gegenüberliegenden ebenen Führungsflächen der Führungsschienen 69 abrollen und für eine sehr genaue Längsführung der Pinole 18 innerhalb der Pinolenhalterung 16 sorgen.

Die vier Linearführungen 66 zwischen dem Hohlprofil 28 und dem Teleskoprohr 32 der Pinole 18 umfassen ebenfalls vier langgestreckte, geradlinige Führungsschienen 68, die in Winkelabständen von 90 Grad am zylindrischen äußeren Umfang des Teleskoprohrs 32 befestigt sind, und vier den Führungsschienen 68 gegenüberliegende, mit Kugeln oder Rollen in Käfigen bestückte langgestreckte Führungsschuhe 70, die starr mit der Innenwand des Hohlprofils 28 verbunden sind. Die in Längsrichtung der Führungsschuhe 70 hintereinander angeordneten Kugeln oder Rollen rollen auf ebenen Führungsflächen der Führungsschienen 68 ab und sorgen für eine sehr genaue Längsführung des Teleskoprohrs 32 innerhalb des Hohlprofils 28.

Da die Linearführungen 64 zwischen den abgeschrägten Ecken 30 der Pinole 18 und der Pinolenhalterung 16 paarweise auf zwei sich kreuzenden Diagonalen des quadratischen Querschnitts der Pinole 18 angeordnet sind und die Pinole 18 entlang der Diagonalen eine höhere Biegesteifigkeit als senkrecht zu den Seitenflächen besitzt, wird für eine hohe Steifigkeit der Anbindung der Pinole 18 an die Pinolenhalterung 16 gesorgt. Entsprechendes gilt für die Anbindung des Teleskoprohrs 32 an das Hohlprofil 28 der Pinole 18, da die Linearführungen 66 zwischen dem Hohlprofil 28 und dem Teleskoprohr 32 ebenfalls paarweise auf diesen Diagonalen angeordnet sind.

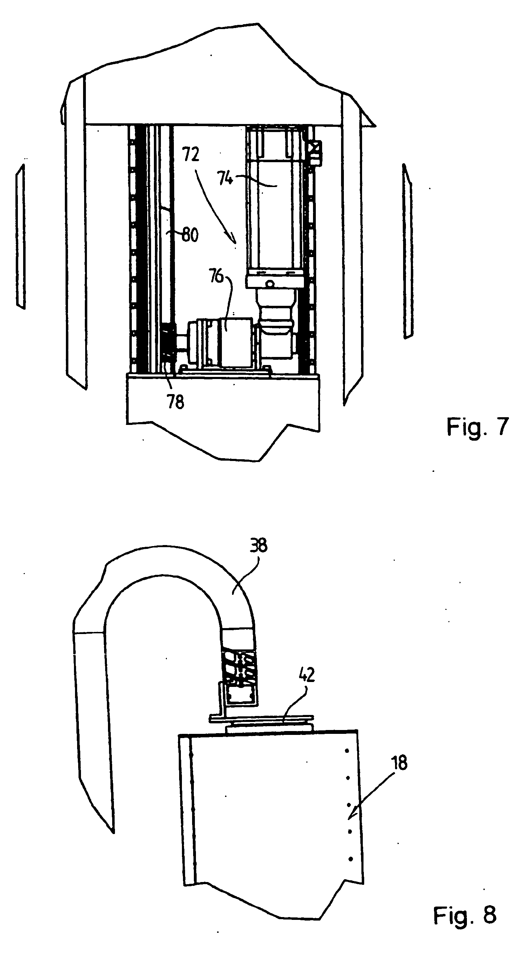

Die vertikale Längsverschiebung der Pinole 18 in Bezug zur Pinolenhalterung 16 erfolgt mit Hilfe eines innerhalb des Gehäuses 44 angeordneten Stellantriebs 72, der einen vertikal montierten Elektromotor 74 und ein Winkeluntersetzungsgetriebe 76 umfasst, wie am besten in Fig. 7 dargestellt. Ein Abtriebsritzel 78 des Untersetzungsgetriebes 76 steht im Zahneingriff mit einer Zahnstange 80, die neben einer abgeschrägten Ecke 30 der Pinole 18 angebracht ist. Die Längsverschiebung des Teleskoprohrs 32 in Bezug zum Hohlprofil 28 der Pinole 18 erfolgt in entsprechender Weise mit Hilfe eines weiteren Stellantriebs (nicht dargestellt), der zwischen dem Hohlprofil 28 und dem Teleskoprohr 32 angeordnet ist und das Teleskoprohr 32 über einen Zahnstangentrieb in Bezug zum Hohlprofil 28 verschiebt.

Die Stromzufuhr zum Elektromotor 74 des Stellantriebs 72 und des Drehantriebs 52 erfolgt über flexible Stromleitungen, die sich über einen am Gehäuse 44 befestigten Leitungsträger (nicht dargestellt) ins Innere des Gehäuses 44 erstrecken. Um zu vermeiden, dass sich die zum Stellantrieb 72 führenden Stromleitungen bei der Drehung der Pinole 18 irgendwo verfangen können, ist das obere Drittel der Pinole 18 von einem zylindrischen Rohr 82 umgeben, dessen unterer Rand in eine nach unten zu konisch verjüngte röhrenförmige Schürze 84 eintaucht und mit der Schürze 84 einen Ringspalt 86 begrenzt, wie am besten in Fig. 2 dargestellt, durch den sich die flexiblen Stromleitungen zum Elektromotor 74 erstrecken. Die Leitungen sind so lang, dass sie mehrere Male spiralig um die Pinole 18 herum verlaufen können.

Um für eine bessere Lastverteilung auf die Stellantriebe der Pinole 18 und des Teleskoprohrs 32 zu sorgen, können jeweils zwei Stellantriebe an Stelle eines einzigen Stellantriebs zwischen der Pinolenhalterung 16 und der Pinole 18 bzw. zwischen dem Hohlprofil 28 und dem Teleskoprohr 32 vorgesehen werden.

Durch die Anordnung des Drehantriebs 52 und der Stellantriebe 72 innerhalb des Gehäuses 44 sind diese vor dem bei der Bearbeitung eines Werkstücks entstehenden Staub geschützt. Durch die Montage des Drehantriebs 52 und der Stellantriebe 72 im Gehäuse 44 wird zudem die Pinole 18 vom Gewicht dieser Antriebe entlastet. Der Zahnkranz 60 des Riementriebs weist ein relativ geringes und in Bezug zur Längsmittelachse 20 gleichförmig verteiltes Gewicht auf, so dass er die Positioniergenauigkeit des Bearbeitungskopfs 22 nicht beeinträchtigt.

Um zu vermeiden, dass beim Einfahren der ausgefahrenen Pinole 18 oder des ausgefahrenen Teleskoprohrs 32 an den Führungsschienen 68 oder Zahnstangen 80 anhaftender Staub ins Innere des Gehäuses 44 verfrachtet wird, sind an den Stellen, wo die Führungsschienen 68 oder Zahnstangen 80 aus dem Gehäuse 44 austreten, jeweils Abstreifer in Form von Filzleisten und/oder Bürsten (nicht dargestellt) vorgesehen, die gegen die Oberflächen der Führungsschienen 68 bzw. Zahnstangen 80 anliegen.

Die innerhalb des Bearbeitungskopfs 22 untergebrachten Antriebe, d.h. der Drehantrieb des Fräs- oder Schleifwerkzeugs 24 und der Schwenkantrieb zum Verschwenken des Fräs- oder Schleifwerkzeugs 24 um die horizontale A-Achse, sind durch eine Abdeckung (nicht dargestellt) aus kohlefaserverstärktem Verbundwerkstoff geschützt, die den Bearbeitungskopf 22 unterhalb des unteren Stirnendes der Pinole 18 umgibt. Diese Abdeckung verhindert zugleich, dass die zu den Antrieben und zum Fräs- oder Schleifwerkzeug führende flexiblen Leitungen beim Verfahren des Bearbeitungskopfs 22 irgendwo hängen bleiben und beschädigt werden können.

## Patentansprüche

1. Bearbeitungsvorrichtung (2) zur abtragenden Bearbeitung von großen Werkstücken, mit einer in Richtung einer X-Achse verfahrbaren Tragstruktur (10), einer auf der Tragstruktur (10) in Richtung einer Y-Achse verfahrbaren Pinolenhalterung (16), einer innerhalb der Pinolenhalterung (16) in Linearführungen (64, 66) in Richtung einer Z-Achse verfahrbaren Pinole (18) und einem an der Pinole (18) angebrachten schwenkbaren Bearbeitungskopf (22), der mit einem rotierenden Bearbeitungswerkzeug (24) bestückt ist, das in Bezug zum Bearbeitungskopf (22) um eine A-Achse verschwenkbar ist, **dadurch gekennzeichnet, dass** den der Bearbeitungskopf (22) zusammen mit der Pinole (18) in der Pinolenhalterung (16) drehbar gelagert ist, und dass die Pinole (18) um eine zur Z-Achse parallele Längsmittelachse (20) der Pinolenhalterung (16) verschwenkbar ist, wobei die Pinolenhalterung (16) an ihren entgegengesetzten Stirnenden jeweils ein Drehlager (50) für die Pinole (18) aufweist, wobei die Drehlager (50) jeweils einen Außenring und einen Innenring umfassen, wobei die beiden Außenringe starr mit einem Gehäuse (44) der Pinolenhalterung (16) verbunden sind und wobei die beiden Innenringe starr mit Führungsschuhen (70) der Linearführungen (64) verbunden sind.

2. Bearbeitungsvorrichtung nach Anspruch 1, **dadurch gekennzeichnet, dass** die Pinole (18) ein im Querschnitt polygonales Hohlprofil (28) umfasst und dass die Linearführungen (64) zwischen der Pinole (18) und der Pinolenhalterung (16) an den Ecken (30) des Hohlprofils (28) angeordnet sind.

3. Bearbeitungsvorrichtung nach einem der vorangehenden Ansprüche, **dadurch gekennzeichnet, dass** die Pinole. (18) teleskopierbar ist und ein Teleskoprohr (32) umfasst, das entlang von Linearführungen (66) in das Hohlprofil (28) einfahrbar und aus dem Hohlprofil (28) ausfahrbar ist.

4. Bearbeitungsvorrichtung nach Anspruch 3, **dadurch gekennzeichnet, dass** die Linearführungen (64, 66) paarweise auf Diagonalen des im Querschnitt im Wesentlichen quadratischen Hohlprofils (28) angeordnet sind.

5. Bearbeitungsvorrichtung nach Anspruch 3 oder 4, **dadurch gekennzeichnet, dass** die Linearführungen (64, 66) jeweils eine starr mit der Pinole (18) bzw. mit dem Teleskoprohr (32) verbundene Führungsschiene (68) und einen starr mit der Pinolenhalterung (16) bzw. mit dem Hohlprofil (28) verbundenen Führungsschuh (70) umfassen, der mehrere auf der Führungsschiene (68) abrollende Kugeln oder Rollen enthält.

6. Bearbeitungsvorrichtung nach einem der vorangehenden Ansprüche, **gekennzeichnet durch** einen Drehantrieb (52) zum Drehen der Pinole (18) in Bezug zur Pinolenhalterung (16) und mindestens einen Stellantrieb (72) zum Verfahren der Pinole (18) in Bezug zur Pinolenhalterung (16) in Richtung der Z-Achse, die innerhalb eines geschlossenen Gehäuses (44) der Pinolenhalterung (16) untergebracht sind.

7. Bearbeitungsvorrichtung nach Anspruch 6, **dadurch gekennzeichnet, dass** das Gehäuse (44) weiter mindestens einen Stellantrieb zum Verfahren der Pinolenhalterung (16) entlang der Y-Achse umschließt.

8. Bearbeitungsvorrichtung nach einem der vorangehenden Ansprüche, **dadurch gekennzeichnet, dass** die Pinole (18) innerhalb der Pinolenhalterung (16) teilweise von einer röhrenförmigen Schürze (84) und einem von oben her in die Schürze (84) eintauchenden Rohr (82) umgeben ist, wobei ein von der Schürze (84) und dem Rohr (82) begrenzter Ringspalt (86) von mindestens einer flexiblen Stromleitung durchsetzt wird.

9. Bearbeitungsvorrichtung nach einem der vorangehenden Ansprüche, **dadurch gekennzeichnet, dass** ein Gehäuse (44) der Pinolenhalterung (16) und/oder ein Hohlprofil (28) der Pinole (18) mindestens teilweise aus einem Wabenmaterial hergestellt ist.

10. Bearbeitungsvorrichtung nach Anspruch 9, **dadurch gekennzeichnet, dass** das Gehäuse (44) der Pinolenhalterung (16) und/oder das Hohlprofil (28) der Pinole (18) mehrere Seitenwände aufweist, die gemeinsam aus einem einzigen Stück wabenmaterial hergestellt und entlang von eingefrästen Filmscharnieren gefaltet sind.

11. Bearbeitungsvorrichtung nach einem der vorangehenden Ansprüche, **gekennzeichnet durch** eine zwischen dem Bearbeitungskopf (22) und dem benachbarten Stirnende der Pinole (18) angeordnete, zum Zentrieren des Bearbeitungswerkzeugs in Bezug zu einer Längsmittelachse (20) der Pinole (18) und der Pinolenhalterung (16) dienende Zentriervorrichtung (34).

12. Bearbeitungsvorrichtung nach einem der vorangehenden Ansprüche, **dadurch gekennzeichnet, dass** durch die Pinole (18) hindurch zum Bearbeitungskopf (22) verlaufende Strom- und/oder Druckluftleitungen über einen drehbar an der Pinole (18) angelenkten Leitungshalter (38) ins Innere der Pinole (18) zugeführt werden.

## Claims

1. Processing device (2) for abrasive processing of large workpieces, comprising a supporting structure (10) traversable in the direction of an X axis, a quill holder (16) traversable on the supporting structure (10) in the direction of a Y axis, a quill (18) traversable inside the quill holder (16) in linear guides (64, 66) in the direction of a Z axis, and a swivelling processing head (22) which is attached to the quill (18) and is fitted with a rotating processing tool (24) which can be swivelled with respect to the processing head (22) about an A axis, **characterized in that** the processing head (22) together with the quill (18) is rotatably mounted in the quill holder (16), and **in that** the quill (18) can be swivelled about a longitudinal centre axis (20), parallel to the Z axis, of the quill holder (16), wherein the opposite end faces of the quill holder (16) each have a rotary bearing (50) for the quill (18), wherein each rotary bearing (50) comprises an outer ring and an inner ring, wherein the two outer rings are rigidly connected to a housing (44) of the quill holder (16), and wherein the two inner rings are rigidly connected to guide shoes (70) of the linear guides (64).

2. Processing device according to Claim 1, **characterized in that** the quill (18) comprises a hollow profile (28) of polygonal cross section, and **in that** the linear guides (64) are arranged between the quill (18) and the quill holder (16) at the corners (30) of the hollow profile (28).

3. Processing device according to either of the preceding claims, **characterized in that** the quill (18) is telescopic and comprises a telescopic tube (32) which can be retracted into the hollow profile (28) and extended from the hollow profile (28) along linear guides (66).

4. Processing device according to Claim 3, **characterized in that** the linear guides (64, 66) are arranged in pairs on diagonals of the hollow profile (28) of substantially square cross section.

5. Processing device according to Claim 3 or 4, **characterized in that** the linear guides (64, 66) each comprise a guide rail (68) connected rigidly to the quill (18) or to the telescopic tube (32) and a guide shoe (70) which is connected rigidly to the quill holder (16) or to the hollow profile (28) and which contains a plurality of balls or rollers rolling on the guide rail (68).

6. Processing device according to one of the preceding claims, **characterized by** a rotary drive (52) for rotating the quill (18) with respect to the quill holder (16) and at least one actuating drive (72) for traversing the quill (18) with respect to the quill holder (16) in the direction of the Z axis, said rotary drive (52) and actuating drive (72) being accommodated inside a closed housing (44) of the quill holder (16).

7. Processing device according to Claim 6, **characterized in that** the housing (44), furthermore, encloses at least one actuating drive for traversing the quill holder (16) along the Y axis.

8. Processing device according to one of the preceding claims, **characterized in that** the quill (18) inside the quill holder (16) is partly surrounded by a tubular apron (84) and a tube (82) plunging into the apron (84) from above, wherein at least one flexible power supply line passes through an annular gap (86) defined by the apron (84) and the tube (82).

9. Processing device according to one of the preceding claims, **characterized in that** a housing (44) of the quill holder (16) and/or a hollow profile (28) of the quill (18) are/is produced at least partly from a honeycomb material.

10. Processing device according to Claim 9, **characterized in that** the housing (44) of the quill holder (16) and/or the hollow profile (28) of the quill (18) have/has a plurality of side walls which are jointly produced from a single piece of honeycomb material and are folded along milled film hinges.

11. Processing device according to one of the preceding claims, **characterized by** a centring device (34) which is arranged between the processing head (22) and the adjacent end face of the quill (18) and serves to centre the processing tool with respect to a longitudinal centre axis (20) of the quill (18) and of the quill holder (16).

12. Processing device according to one of the preceding claims, **characterized in that** power supply lines and/or compressed air lines running through the quill (18) to the processing head (22) are fed into the interior of the quill (18) via a line carrier (38) rotatably linked to the quill (18).

## Revendications

1. Dispositif d'usinage (2) pour l'usinage par enlèvement de copeaux de grandes pièces, comprenant une structure portante (10) déplaçable dans la direction d'un axe X, un support de douille (16) déplaçable sur la structure portante (10) dans la direction d'un axe Y, une douille (18) déplaçable à l'intérieur du support de douille (16) dans des guides linéaires (64, 66) dans la direction d'un axe Z, et une tête d'usinage (22) pivotante montée sur la douille (18), qui est munie d'un outil d'usinage (24) rotatif, qui peut être pivoté autour d'un axe A par rapport à la tête d'usinage (22), **caractérisé en ce que** la tête d'usinage (22) conjointement avec la douille (18) dans le support de douille (16) sont montées à rotation, et **en ce que** la douille (18) peut pivoter autour d'un axe médian longitudinal (20) du support de douille (16) parallèle à l'axe Z, le support de douille (16) présentant à ses extrémités frontales opposées à chaque fois un palier rotatif (50) pour la douille (18), les paliers rotatifs (50) comprenant à chaque fois une bague extérieure et une bague intérieure, les deux bagues extérieures étant connectées rigidement à un boîtier (44) du support de douille (16) et les deux bagues intérieures étant connectées rigidement à des sabots de guidage (70) des guides linéaires (64).

2. Dispositif d'usinage selon la revendication 1, **caractérisé en ce que** la douille (18) comprend un profilé polygonal creux (28) en section transversale, et **en ce que** les guides linéaires (64) sont disposés entre la douille (18) et le support de douille (16) aux coins (30) du profilé creux (28).

3. Dispositif d'usinage selon l'une quelconque des revendications précédentes, **caractérisé en ce que** la douille (18) est télescopable et comprend un tube télescopique (32) qui peut être rentré le long de guides linéaires (66) dans le profilé creux (28) et qui peut être ressorti du profilé creux (28) .

4. Dispositif d'usinage selon la revendication 3, **caractérisé en ce que** les guides linéaires (64, 66) sont disposés par paires sur des diagonales du profilé creux (28) de section transversale sensiblement carrée.

5. Dispositif d'usinage selon la revendication 3 ou 4, **caractérisé en ce que** les guides linéaires (64, 66) comprennent à chaque fois un rail de guidage (68) connecté rigidement à la douille (18) ou au tube télescopique (32), et un sabot de guidage (70) connecté rigidement au support de douille (16) ou au profilé creux (28), lequel sabot contient plusieurs billes ou rouleaux roulants sur le rail de guidage (68).

6. Dispositif d'usinage selon l'une quelconque des revendications précédentes, **caractérisé par** un entraînement en rotation (52) pour faire tourner la douille (18) par rapport au support de douille (16) et au moins un entraînement de commande (72) pour déplacer la douille (18) par rapport au support de douille (16) dans la direction de l'axe Z, lesquels sont montés à l'intérieur d'un boîtier fermé (44) du support de douille (16).

7. Dispositif d'usinage selon la revendication 6, **caractérisé en ce que** le boîtier (44) entoure en outre au moins un entraînement de commande pour déplacer le support de douille (16) le long de l'axe Y.

8. Dispositif d'usinage selon l'une quelconque des revendications précédentes, **caractérisé en ce que** la douille (18) est entourée à l'intérieur du support de douille (16) en partie par une jupe de forme tubulaire (84) et par un tube (82) plongeant par le haut dans la jupe (84), un interstice annulaire (86) limité par la jupe (84) et par le tube (82) étant traversé par au moins une ligne d'alimentation en courant flexible.

9. Dispositif d'usinage selon l'une quelconque des revendications précédentes, **caractérisé en ce qu'**un boîtier (44) du support de douille (16) et/ou un profilé creux (28) de la douille (18) sont fabriqués au moins en partie en un matériau en nid d'abeilles.

10. Dispositif d'usinage selon la revendication 9, **caractérisé en ce que** le boîtier (44) du support de douille (16) et/ou le profilé creux (28) de la douille (18) présentent plusieurs parois latérales, qui sont fabriquées ensemble à partir d'un morceau unique de matériau en nid d'abeilles et qui sont pliées le long de charnières à film fraisées.

11. Dispositif d'usinage selon l'une quelconque des revendications précédentes, **caractérisé par** un dispositif de centrage (34) disposé entre la tête d'usinage (22) et l'extrémité frontale adjacente de la douille (18), servant au centrage de l'outil d'usinage par rapport à un axe médian longitudinal (20) de la douille (18) et du support de douille (16).

12. Dispositif d'usinage selon l'une quelconque des revendications précédentes, **caractérisé en ce que** des lignes d'alimentation en courant et/ou en air sous pression s'étendant à travers la douille (18) jusqu'à la tête d'usinage (22) sont amenées jusqu'à l'intérieur de la douille (18) par le biais d'un support de lignes (38) articulé à la douille (18) de manière rotative.
